# EUROPEAN PATENT SPECIFICATION

(11) **EP 2 606 733 B1**
(45) Date of publication and mention of the grant of the patent: **22.08.2018**
(21) Application number: 11195516.7
(22) Date of filing: 23.12.2011
(51) Int. Cl.: A23D 7/005, A23G 3/54, A21D 13/38, A21D 13/24, A21D 13/36, A21D 13/32, A21D 13/28, A23G 3/52, A23D 7/00, A23G 3/34

(54) **Aerated filling composition**
Durchlüftete Füllungszusammensetzung
Composition de remplissage aérée

(43) Date of publication of application: 26.06.2013
(73) Proprietor: Nestec S.A., 1800 Vevey (CH)
(72) Inventor: Vieira, Josélio Batista, York, Yorkshire YO31 8LG (GB)
(74) Representative: Lumsden, Stuart Edward Henry

(56) References cited:
- EP-A1- 0 500 182
- EP-A1- 1 759 591
- WO-A1-02/071870
- US-A1- 2010 104 700

## Description

### Field of the invention

The present invention relates to fat based filling compositions (also referred to as creams, pralines), more particularly to aerated fat-continuous filling compositions comprising an aerated oil-in-water emulsion, as well as to methods for preparing such a filling composition and to composite products comprising such a filling composition.

### Background of the invention

Fat based fillings are used in a variety of food products, especially in the field of confectionery. Examples of lipid based fillings include sweet or savory filings, such as for sandwich biscuits, for wafer products, for crackers, for filled chocolates, or for cakes. However such fat based fillings tend to have a nutritional profile high in fat and calories in order to provide the desired texture and organoleptic properties, such as melt-in-the-mouth and a creamy mouth feel.

Commonly used fats for fat based fillings are hydrogenated coconut and palm kernel oils, and palm oil fractions. Examples of typical conventional cream fillings include those described, for instance, in US 3,244,536, US 4,834,991, or US 4,753,812, as well as in the chapter entitled 'Sweet and savoury biscuit creams', in D. Manley, Biscuit, cracker and cookie recipes for the food industry, Woodhead Publishing Limited, 2001, p. 137ff. Typical fat-based fillings have a fat content of about 40 to 70% w/w.

Therefore, as a growing proportion of consumers try to limit their intake of fat and/or calories, many attempts have been made by the Food Industry, and in particular the confectionery industry, to lower the fat and calorie contents of said filling compositions.

Examples of such attempts include replacement of sugar by sugar replacers such as polyols and/or polydextroses, use of special fats, or use of special emulsifiers. Other approaches have been made using emulsions, which provide fat and calorie reduction compared to conventional fat-based filings due to replacement of part of the fat-phase with an aqueous phase. Water-in-oil emulsions offer particular advantages for confectionery applications due to the fat-continuous phase which can provide organoleptic properties more similar to those of the fat phase. However known filing compositions based on water-in-oil emulsions are limited in the extent of fat-reduction they can provide without negatively affecting the texture and organoleptic properties of the filling (WO02/071870A1, EP1759591 A1, EP0500182A1). Also such emulsion based filings require the addition of synthetic or artificial emulsifiers and/or other stabilising agents in order to form a stable emulsion.

Another approach used is aeration, which has been applied to fat-based confectioneries such as chocolate. Aeration has been used to produce novel tastes and textures in confectionery products (US2010/104700A1) and also allows to reduce the fat and calorie content per volume of the confectionery product. There is however a limit to the reduction of fat possible without negatively effecting the texture and organoleptic properties of the fat-based confectionery product. WO2010/112835 describes a mechanically aerated edible water-in-oil emulsion. However the aerated emulsion product of WO2010/112835 requires the use of mechanical aeration and of specific emulsifiers, and uses specific blends of fat for the fat phase.

The consumer is not willing to compromise on the organoleptic properties of filling compositions, in order to reduce fat and calorie intake. Taste, texture and overall appearance are such organoleptic properties.

Obviously, industrial line efficiency is important in the food industry. This includes handling and processing of raw materials, processing of the filling, preparation of composite products comprising the filing, packaging and later storing, in warehouses, on the shelf or at home.

Accordingly there is an ongoing need to provide filing compositions with reduced calorie and/or fat content compared to conventional fat-based fillings, yet having good organoleptic properties, and that may be easily industrialised at a reasonable cost.

### Summary of the invention

In one aspect there is provided a filling composition comprising a chemically aerated water-in-oil emulsion comprising a fat phase and an aqueous phase. The aerated water-in-oil emulsion comprises less than 30% w/w fat and has a water activity Aw of less than 0.65. In a preferred embodiment the aerated water-in-oil emulsion comprises no more than 25% w/w fat, preferably no more than 20% w/w fat. The aerated water-in-oil emulsion can comprise as low as 10% w/w fat.

The water in oil emulsion is chemically aerated. The chemical aeration is provided by the combination of at least one food grade leavening agent and at least one food grade acid or acid salt. Suitable leavening agents include food grade carbonates and bicarbonates.

Advantageously the present invention provides aerated confectionery fillings which have reduced fat and calorie content, whilst maintaining the good organoleptic properties of a fat filling.

Advantageously the present invention makes it possible to provide aerated fat-continuous confectionery fillings with low fat content, as low as 25% w/w fat, even as low as 20% w/w fat, and even lower.

Advantageously the chemically aerated water-in-oil emulsions of the present invention do not require the addition of any synthetic emulsifying agents. In one embodiment there is provided a filing composition comprising a chemically aerated water-in-oil emulsion comprising a fat phase and an aqueous phase, which is free from added synthetic emulsifying agents.

Advantageously the chemically aerated water-in-oil emulsion based filing composition of the present invention can have a high degree of aeration. This provides benefits in terms of fat and calorie reduction per unit volume and provides advantageous texture and mouthfeel to the filling composition. In some embodiments the chemically aerated emulsion has a density of from 0.60g/cm³ to less than 0.90 g/cm³.

Another advantage of the chemically aerated water-in-oil emulsions of the present invention is that they provide reduced fat and calorie filings with a low water activity, lower than 0.65 and even lower than 0.55, permitting the fillings to be used in composite products compatible with the filling Aw value, for example as a filing for a wafer product, without any negative effect on the crispiness of the wafer components during shelf-life.

In other aspects there are provided composite products, including composite bakery products and composite confectionery products containing the filling composition.

There is also provided a process for preparing the filling composition according to the present invention, comprising providing a first component for forming the aqueous phase of an emulsion, providing a second component for forming a fat phase of the emulsion; adding a food grade acid or a food grade acid salt to one of the first or second components, and adding a leavening agent to the second component; mixing said first component into said second component to form a chemically aerated water-in-oil emulsion.

Another advantage of the present invention is that it is easily applied on industrial scale and avoids the need for any mechanical aeration apparatus, and the associated costs and complications of a manufacturing process with mechanical aeration.

### Detailed description of the invention

The inventors of the present invention have surprisingly found that fat-continuous aerated filling compositions with reduced fat content and with good organoleptic properties can be prepared by chemical aeration of a water-in-oil emulsion with fat content of less than 30% w/w.

It has surprisingly be found that by the chemical aeration of a water-in-oil emulsion with fat content of less than 30% w/w, by the combination of a leavening agent and a food grade acid or acid salt, aerated emulsion based filings can be achieved with a low water activity (Aw), less than 0.65 and even less than 0.60 or 0.55. In one preferred embodiment the aerated emulsion based filing has an Aw of from about 0.50 to less than 0.65, preferably from about 0.50 to about 0.60, even more preferably from about 0.50 to about 0.55, and in some embodiments the aerated emulsion based filing has an Aw below 0.55. As some water is required to trigger the reaction of the chemical aeration agents, it becomes more difficult to obtain a filling with Aw of much below 0.50 with the desired good aeration properties.

The present invention thereby offers the important advantage of providing emulsion based fillings, which have a reduced fat and calorie content compared to the conventional fat phase filling, and yet have good texture and organoleptic properties, and which are suitable for use as a filling in a combination product, or sandwich product, with dry food components, particularly biscuits and wafers, due to the surprisingly low Aw of the fillings.

The chemical aeration is provided by reaction of aerating agents in the emulsion. Suitable aerating agents include combinations of at least one food grade leavening agent and at least one food grade acid component.

Accordingly in one aspect the present invention provides a chemically aerated water-in-oil emulsion aerated by the reaction between a leavening agent and an acid component.

Suitable leavening agents are food grade leavening agents and particularly food grade bicarbonate and carbonate salts. In a preferred embodiment the leavening agent is an alkai metal salt or an alkali earth metal salt of a carbonate or bicarbonate, or any ammonium salt of a carbonate or a bicarbonate, or a mixture thereof. Preferred bircarbonate and carbonate salts include sodium bicarbonate, potassium bicarbonate, ammonium bicarbonate, sodium carbonate, potassium carbonate, calcium carbonate, magnesium carbonate, or a mixture thereof. In one preferred embodiment the leavening agent is selected from sodium carbonate, sodium bicarbonate or a mixture thereof.

The amount of leavening agent to be added can be varied depending amongst others on the nature of the leavening agent, the amount of the acid component, and the desired degree of aeration. Typically bicarbonate and/or carbonate salts may be added in an amount from about 0.5% w/w to 5.0% w/w, preferably from about 1.0% w/w to about 3.0% w/w based on the weight of the emulsion product.

Suitable acid components are food grade acids and acid salts. An acid or an acid salt may be used alone. Alternatively combinations of more than one acid, or more than one acid salt, or of an acid and an acid salt may be used. Suitable food grade acids include citric acid, tartaric acid, fumaric acid, lactic acid, acetic acid, malic acid and phosphoric acid. Suitable food grade acid salts include cream of tartar (potassium bitartrate), di-sodium di-hydrogen pyrophosphate and sodium di-hydrogen phosphate.

The amount of acid component to be added can be varied depending amongst others on the nature of the acid or acid salt, the amount of the leavening agent, and the desired degree of aeration. Typically acid and/or acid salts may be added in an amount from about 0.1% w/w to 1.0% w/w, preferably from about 0.2% w/w to about 0.8% w/w based on the weight of the emulsion product.

Accordingly the filling composition contains reaction products of the reaction of leaving agent and acid component in the emulsion. Where the leavening agent is a bicarbonate salt and/or a carbonate salt, and the acid component is an acid or an acid salt the filling composition will contain products of the reaction between the bicarbonate salt and/or carbonate salt, and the acid, otherwise referred to as "reaction products". The reaction products include the salt of the acid component. For example where the leavening agent is in the form of a sodium salt of the bicarbonate and/or carbonate, the reaction products include the sodium salt of the acid component.

The reaction of the bicarbonate salt and/or carbonate salt leavening agent with the acid component leads to the liberation of carbon dioxide gas in the emulsion, thereby causing the aeration of the emulsion. Accordingly the aerated emulsion comprises entrapped carbon dioxide gas.

The chemical aeration of the emulsion according to the invention leads to aeration of the aqueous phase, and according to one embodiment the filling composition comprises a chemically aerated water-in-oil emulsion comprising a fat phase and an aqueous phase, comprising carbon dioxide gas entrapped in the aqueous phase.

Typically the filling composition can contain also an amount of unreacted leavening agent, e.g. unreacted bicarbonate salt and/or carbonate salt, and/or of unreacted acid component.

In the present specification, the term "fat phase" has to be understood as including any solid and/or liquid ingredient miscible with oil or fat or that has the capacity to dissolve in oil or fat, and "aqueous phase" as any solid and/or liquid ingredient miscible with water or that has the capacity to dissolve in water. For example, the fat phase may comprise lipophilic lecithin, and the aqueous phase may comprise sugars.

The aerated water-in-oil emulsion of the present invention advantageously is stable without the need for addition of any synthetic emulsifying agent, and in some embodiments the filling composition of the present invention is substantially free of artificial emulsifying agent or stabilising agent. In other embodiments the aerated water-in-oil emulsion filling composition of the invention may include synthetic emulsifying agent and/or stabilising agent. Suitable emulsifying agents include sugar esters, polyglycerol fatty acid esters, polyglycerol polyricinoleate (PGPR), polysorbates (polyoxyethylene sorbitan esters), monoglycerides. Monodiglycerides, mono-diglyceride derivatives, such as derivatives of citric acids, lactic acids and others, and combinations thereof. Preferred emulsifiers are monoglycerides, polyglycerol polyricinoleate (PGPR) or combinations thereof.

The filling composition has a fat content of less than 30% w/w. In a preferred embodiment the filling composition has a fat content of at least 10% w/w and less than 30% w/w. In some embodiments the filing composition has a fat content in the range of from 15% w/w to 25%. In a preferred embodiment the filling composition has a fat content of less than 25% w/w, for example a fat content of at least 10% w/w and less than 25% w/w. In a further preferred embodiment the filling composition has a fat content in the range of from 10% w/w to 20% w/w. In some embodiments the filling composition has a fat content of less than 20% w/w, e.g. at least 10% w/w and less than 20% w/w, preferably a fat content in the range of from 10% w/w to 15% w/w. The amount of fat desired may vary depending on the type of product.

Suitable fats for the fat-phase of the emulsion include any non-lauric fat, such as palm oil, palm oil fractions, butterfat, cocoa butter, cocoa butter replacers, sunflower oil, rapeseed oil, soybean oil, cottonseed oil and their mixtures. Typically cocoa butter replacers are hydrogenated, fractionated fat blends from soybean oil, rapeseed oil, palm oil, cottonseed oil, and/or sunflower oil, or other similar fats.

The reduced fat filling composition of the present invention is a water-in-oil emulsion, wherein the aqueous phase represents at least 30% of the final product and the fat phase at most 70% (w/w). Preferably, the aqueous phase represents 30 to 90% (w/w) of the product, preferably 40-80% (w/w), such as 40-80% (w/w). In some embodiments the aqueous phase represents 40 to 60% (w/w) of the emulsion product. The present invention makes it possible to produce fat-continuous filling compositions with fat content less than 30% w/w, a water activity of less than 0.65, and a high degree of aeration. This provides benefits in terms of fat and calorie reduction per unit volume and provides advantageous texture and mouthfeel to the filling composition. The chemically aerated emulsion of the present invention can have a density of from about 0.50g/cm³ to about 1.00 g/cm³, preferably 0.50g/cm³ to about 0.90 g/cm3. In a preferred embodiment the chemically aerated emulsion has a density of from 0.50g/cm³ to 0.85 g/cm³, more preferably from 0.60g/cm³ to 0.80 g/cm³, such as from 0.70g/cm³ to 0.80 g/cm³.

Water activity or A_{w} is a measurement of water content. It is defined as the vapor pressure of a liquid divided by that of pure water at the same temperature; therefore, pure distilled water has a water activity of exactly one. Water activity can be measured according to the AOAC method 978.18 and performed at 25°C, after equilibrium is reached, using a HygroLab instrument from Rotronic. Higher Aw substances tend to support more microorganisms that may destroy the product. Bacteria usually require at least 0.91, and fungi at least 0.7. At A_{w} values above 0.65 crunchy products tend to lose their crunchiness.

The chemically aerated water-in-oil emulsions of the present invention have a water activity lower than 0.65, such as in the range 0.5 to 0.63. The chemically aerated water-in-oil emulsion based filling compositions of the invention can have an Aw lower than 0.60 and even low as 0.55, or even lower than 0.55. The low Aw of the filling compositions permits the fillings to be used in composite products compatible with the filling Aw value such as a filing for a wafer product without any negative effect on the crispiness of the wafer components during shelf-life. This a great advantage over known emulsion based fillings which have a higher water activity (Aw).

Furthermore present invention makes it possible to provide filling compositions that are spreadable yet have a low water activity, Aw below 0.60.

In the present context the term "filling composition" relates to a pre-prepared composition to be used as one part of a composite product. The filling and the other part(s) of the composite product are composed of different components. Preferably, the filling is surrounded by the other part(s) of the composite product.

The filling compositions of the invention have a firm texture, and a creamy and pleasant mouth feel. The present invention makes it possible to provide sweet and savoury water-in-oil emulsion based fillings, which are suitable for use in a composite product such as a sandwich, a biscuit, a wafer, or as a topping.

The filing composition, or cream, of the invention may be sweet, e.g. a confectionary filling (aerated or non-aerated), for use in a composite product such as a sandwich, a biscuit, a wafer, or other composite confectionary product. The filling composition, or cream, according to the invention may alternatively be savory, such as a filling for a bakery product or a sandwich cracker, or a lipid based topping, e.g. for use on top of a composite product, or a spread.

Depending on the specific type of filling composition, different types of ingredients may be supplemented to the filling composition.

For instance typical savory filling compositions may further comprise supplementary ingredients such as solid fats, salt, maltodextrin, skimmed milk powder, full cream milk powder (FCMP), whey powder, cheese powder, natural or synthetic flavors, natural or artificial colors, starch based fillers, emulsifiers such as lecithin, and other ingredients. Generally the major ingredient in a savory filling is fat. Typical total fat content of a savory filling is about 5 - 70 % (w/w), preferably 15 - 55 (w/w), more preferably 20 - 50 (w/w). In some embodiments the filling composition may have a salt content in the range 0-2% by weight of the filling composition. In a more specific embodiment the salt is sodium chloride, potassium chloride or combinations thereof.

For instance typical sweet filling compositions may further comprise supplementary ingredients such as sugar, skimmed milk powder, full cream milk powder, whey powder, cocoa powder, natural or synthetic flavors, natural or artificial colors, starch based fillers, emulsifiers such as lecithin, and other ingredients. The filling composition for confectionery filling comprises sugars. These sugars include sucrose, fructose, glucose syrup, sugar replacers such as polyols (e.g., maltitol, lactitol, isomalt, erythritol, sorbitol, mannitol, xylitol) or bulking agents like polydextrose or other sweeteners like tagatose or high intensity sweeteners like saccharin, aspartame, acesulfame-K, cyclamate, neohesperidin, thaumathin, sucralose, alitame, neotame or any combination thereof. The sugar is typically one or more of sucrose, dextrose, maltodextrin and/or lactose, preferably sucrose.

In some embodiments the sweet confectionery filling comprises an amount of sugar of about 10 to 70 % w/w, preferably from about 20 to 70% w/w, such as from about 35 to 65 % w/w, such as from about 45 to 55 % w/w sugar.

In some embodiments the sweet confectionery filling contains cocoa powder in an amount from 1 to 80% w/w, preferably from about 5 to 70% w/w, such as from about 5 to 50% w/w, from about 5 to 40% w/w, from about 5 to 30% w/w, for instance around 5 to 20% w/w cocoa powder.

In a particular embodiment the filling composition comprises from 10 to 70% w/w of sugar, and from 5 to 70% of cocoa powder.

In some embodiments the sweet filling composition may have a salt content in the range 0-2% by weight of the filling composition. In a more specific embodiment the salt is sodium chloride, potassium chloride or combinations thereof.

According to one aspect of the present invention a process is provided for preparing a filling composition according to the present invention, comprising providing a first component for forming the aqueous phase of an emulsion, providing a second component for forming a fat phase of the emulsion; adding a food grade acid or a food grade acid salt to one of the first or second components, and adding a leavening agent to the second component; mixing said first component into said second component to form a chemically aerated water-in-oil emulsion.

The aqueous phase can be prepared by mixing together the components of the aqueous phase in a conventional manner using standard mixing equipment. Optionally the aqueous phase may be heated in order to ensure good dissolution of ingredients added in solid form, e.g. heating to a temperature in the range of from about 40°C to about 75°C, preferably in the range of from about 50°C to about 70°C, such as in the range of from about 50°C to about 65°C.

The fat phase can be prepared by mixing together of the components of the fat phase in a conventional manner using standard mixing equipment. Optionally the fat phase may be heated in order to ensure good dispersion/dissolution of ingredients added in solid form, e.g. heating to a temperature in the range of from about 40°C to about 75°C, preferably in the range of from about 50°C to about 70°C, such as in the range of from about 50°C to about 65°C.

The leavening agent, in particular a bicarbonate salt or carbonate salt is added in the fat phase. The acid component, in particular a food grade acid or acid salt may be added in either of the fat phase or the aqueous phase. In a particular embodiment the at least one leavening agent is added to the fat phase and the food grade acid or food grade acid salt is added to the aqueous phase.

In order to form the aerated water-in-oil the aqueous phase is added into the fat phase with agitation. The mixing of the fat and aqueous phases if preferably performed with heating to a temperature above ambient temperature, preferably a temperature in the range of 40°C to 75°C, more preferably in the range of from 50°C to 70°C, e.g. in the range of from 60°C to 70°C, such as around 65°C, to promote the reaction of the aeration agents to provide the aerated emulsion.

The aerated water-in-oil emulsion can then be cooled and used in the preparation of a composite product, for instance at ambient or above ambient temperatures. The filing composition of the invention is stable on storage at ambient conditions.

The mixing of the ingredients and the mixing of the aqueous an fat phases can be carried out by conventional mixing methods, for instance using standard industrial mixing apparatus.

It should be noted that embodiments and features described in the context of one of the aspects or embodiments of the present invention also apply to the other aspects of the invention.

According to another aspect there is provided a composite product comprising the filling composition according to the invention, wherein the composite product is a bakery or confectionery product. The composite product may be, for instance, a sandwich, biscuit, cracker, wafer, or bakery product comprising the filling composition of the invention as a filling or as a topping.

The invention will now be described in further details in the following non-limiting example.

### EXAMPLES

### Example 1 - Preparation of a chemically aerated filling:

A number of filings were prepared according to the recipe examples below:

| **Ingredients** | **Recipe 1** | **Recipe 2** |
|---|---|---|
| | Weight % | Weight % |
| **Aqueous Phase** | | |
| Dextrose Monohydrate | 9.6 | |
| Sucrose | 15.0 | 10.0 |
| High Maltose Glucose Syrup 50-54DE 80%DS | 65.0 | 78.0 |
| Skimmed Milk Powder | 6.0 | 7.2 |
| Potassium Chloride | 1.5 | 1.8 |
| Citric Acid | 0.4 | 0.5 |
| Water | 2.5 | 2.5 |

| **Fat Phase** | | |
|---|---|---|
| Chocofill NH15 Palm-based Fat | 44.9 | |
| Palm Olein | | 35.9 |
| Cocoa Powder Natural 10-12% | 23.0 | 18.4 |
| Dextrose Monohydrate | | 11.6 |
| Sucrose | 23.6 | 27.5 |
| Soy Lecithin | 2.5 | 2.0 |
| Sodium Bicarbonate | 4.0 | 3.0 |
| Calcium Carbonate | 2.0 | 1.6 |

| **W/O Emulsion** | | |
|---|---|---|
| Water Phase | 60.0 | 50.0 |
| Fat Phase | 40.0 | 50.0 |

The aqueous phase was prepared by mixing glucose syrup and and water at 50°C. The sucrose was then added and the resulting mixture mixed using a Silverson 2RT mixer at 3,000RPM, then heated to 65°C. The p pre-blended skimmed milk powder and dextrose with mixing at 2,000RPM and heating maintained at 65°C. The potassium chloride and citric acid and were then added with mixing at 2,000RPM and heating maintained at 65°C.

The fat phase was prepared by melting the Chocofil NH15 fat or palm olein at 50°C, to which was added the other ingredients of the fat phase (lecithin, sucrose, dextrose (recipe 1), cocoa powder, calcium carbonate and sodium bicarbonate) with mixing at 50°C until a homogeneous mixture was formed.

The fat phase was then heated to 65°C and the aqueous phase folded into the fat phase at 65°C to allow chemical the aeration. The resultant aerated water-in-oil emulsion product was then allowed to cool to room temperature.
Density was measured by gravimetric analysis, according to conventional methods. Water activity was measured using a Novasina LabPartner Aw analyser (ex Novasina, UK).

| | **Recipe 1** | **Recipe 2** |
|---|---|---|
| Aerated Emulsion Aw | 0.550 | 0.553 |
| Density (g/cm³) | 0.72 | 0.75 |
| Total Fat (% w/w) | 20.0 | 20.0 |

## Claims

1. A filling composition comprising a chemically aerated water-in-oil emulsion comprising a fat phase and an aqueous phase, said aerated filling comprising less than 30% fat and having a water activity A_{w} of less than 0.65.

2. A filling composition according to claim 1 comprising a reaction product of at least one leavening agent and at least one food grade acid or food grade acid salt.

3. A filling composition according to claim 1 or 2 comprising a reaction product of at least one food grade carbonate salt or bicarbonate salt and at least one food grade acid or acid salt.

4. A filling composition according to claim 3 wherein the carbonate salt or bicarbonate salt is an alkali or alkali earth metal salt.

5. A filling composition according to any one of claims 2 to 4 wherein the food grade acid or food grade acid salt is selected from : citric acid, tartaric acid, fumaric acid, lactic acid, acetic acid, malic acid, phosphoric acid, cream of tartar, Di-sodium di-hydrogen pyrophosphate and Sodium di-hydrogen phosphate.

6. A filling composition according to any one of the preceding claims comprising an alkali or alkali earth metal salt of a food grade acid.

7. A filling composition according to any one of the preceding claims having a density of from about 0.5 g/cm³ to about 0.9 g/cm³.

8. A filling composition according to any one of the preceding claims wherein the aqueous phase of the aerated emulsion comprises entrapped gas.

9. A filling composition according to any one of the preceding claims comprising from 10% to 25% w/w fat.

10. A filling composition according to any one of the preceding claims wherein the filling composition is free of added synthetic emulsifiers.

11. A filling composition according to any one of the preceding claims further comprising from 10 to 70% w/w of sugar, and from 0 to 70% of cocoa powder.

12. A composite product comprising the filling composition according to any one of claims 1 to 11.

13. A composite product according to claim 12 wherein the composite product is a bakery or confectionary product.

14. A composite product according to claim 12 wherein the composite product is a confectionery product and comprises a shell or a coating at least partially enclosing the filling.

15. A composite product according to claim 13 wherein the filling composition is in contact with at least one wafer component.

16. A process for the preparation of a filing composition according to anyone of claims 1 to 11 comprising providing a first component for forming the aqueous phase of an emulsion, providing a second component for forming a fat phase of the emulsion, adding a food grade acid or a food grade acid salt to one of the first or second components, and adding a leavening agent to the second component; mixing said first component into said second component to form a chemically aerated water-in-oil emulsion.

17. A process according to claim 16 wherein the aqueous phase comprises a food grade acid or a food grade acid salt, and the fat phase comprises a leavening agent.

18. A process according to claim 16 or 17 wherein the leavening agent is calcium carbonate and/or sodium bicarbonate.

19. A process according to any one of claims 16 to 18 wherein a food grade acid selected from citric acid or tartaric acid is added to the aqueous phase

20. A process according to any one of claims 16 to 19 comprising heating the aqueous phase to a temperature between 50°C and 75°C.

21. A process according to any one of claims 16 to 20 wherein the first component and second component are mixed at a temperature between 50°C and 75°C

## Patentansprüche

1. Füllungszusammensetzung, die eine chemisch mit Luft durchsetzte Wasser-in-ÖI-Emulsion umfasst, die eine Fettphase und eine wässrige Phase umfasst, wobei die mit Luft durchsetzte Füllung weniger als 30 % Fett umfasst und eine Wasseraktivität A_{w} von weniger als 0,65 aufweist.

2. Füllungszusammensetzung nach Anspruch 1, die ein Reaktionsprodukt aus mindestens einem Gärmittel und mindestens einer lebensmittelgeeigneten Säure oder einem lebensmittelgeeigneten Säuresalz umfasst.

3. Füllungszusammensetzung nach Anspruch 1 oder 2, die ein Reaktionsprodukt aus mindestens einem lebensmittelgeeigneten Carbonatsalz oder Bicarbonatsalz und mindestens einer lebensmittelgeeigneten Säure oder einem lebensmittelgeeigneten Säuresalz umfasst.

4. Füllungszusammensetzung nach Anspruch 3, wobei es sich bei dem Carbonatsalz oder dem Bicarbonatsalz um ein Alkali- oder Erdalkalimetallsalz handelt.

5. Füllungszusammensetzung nach einem der Ansprüche 2 bis 4, wobei die lebensmittelgeeignete Säure oder das lebensmittelgeeignete Säuresalz ausgewählt ist aus: Citronensäure, Weinsäure, Fumarsäure, Milchsäure, Essigsäure, Äpfelsäure, Phosphorsäure, Weinstein, Dinatriumdihydrogenpyrophosphat und Natriumdihydrogenphosphat.

6. Füllungszusammensetzung nach einem der vorstehenden Ansprüche, die ein Alkali- oder Erdalkalimetallsalz einer lebensmittelgeeigneten Säure umfasst.

7. Füllungszusammensetzung nach einem der vorstehenden Ansprüche mit einer Dichte im Bereich von etwa 0,5 g/cm³ bis etwa 0,9 g/cm³.

8. Füllungszusammensetzung nach einem der vorstehenden Ansprüche, wobei die wässrige Phase der mit Luft durchsetzten Emulsion eingeschlossenes Gas umfasst.

9. Füllungszusammensetzung nach einem der vorstehenden Ansprüche, die 10 Gew.-% bis 25 Gew.-% Fett umfasst.

10. Füllungszusammensetzung nach einem der vorstehenden Ansprüche, wobei die Füllungszusammensetzung frei von zugegebenen synthetischen Emulgatoren ist.

11. Füllungszusammensetzung nach einem der vorstehenden Ansprüche, die ferner 10 bis 70 Gew.-% Zucker und 0 bis 70 Gew.-% Kakaopulver umfasst.

12. Zusammengesetztes Produkt, das die Füllungszusammensetzung nach einem der Ansprüche 1 bis 11 umfasst.

13. Zusammengesetztes Produkt nach Anspruch 12, wobei es sich bei dem zusammengesetzten Produkt um ein Back- oder Süßwarenprodukt handelt.

14. Zusammengesetztes Produkt nach Anspruch 12, wobei es sich bei dem zusammengesetzten Produkt um ein Süßwarenprodukt handelt, das eine Hülle oder einen Überzug umfasst, die bzw. der die Füllung zumindest teilweise einschließt.

15. Zusammengesetztes Produkt nach Anspruch 13, wobei die Füllungszusammensetzung mit mindestens einem Waffelbestandteil in Kontakt ist.

16. Verfahren zum Herstellen einer Füllungszusammensetzung nach einem der Ansprüche 1 bis 11, das das Bereitstellen eines ersten Bestandteils zum Bilden der wässrigen Phase einer Emulsion, das Bereitstellen eines zweiten Bestandteils zum Bilden einer Fettphase der Emulsion, das Zugeben einer lebensmittelgeeigneten Säure oder eines lebensmittelgeeigneten Säuresalzes zu dem ersten oder dem zweiten Bestandteil und das Zugeben eines Gärmittels zu dem zweiten Bestandteil; das Einmischen des ersten Bestandteils in den zweiten Bestandteil zum Bilden einer chemisch mit Luft durchsetzten Wasser-in-ÖI-Emulsion umfasst.

17. Verfahren nach Anspruch 16, wobei die wässrige Phase eine lebensmittelgeeignete Säure oder ein lebensmittelgeeignetes Säuresalz umfasst und die Fettphase ein Gärmittel umfasst.

18. Verfahren nach Anspruch 16 oder 17, wobei es sich bei dem Gärmittel um Calciumcarbonat und/oder Natriumbicarbonat handelt.

19. Verfahren nach einem der Ansprüche 16 bis 18, wobei eine aus Citronensäure oder Weinsäure ausgewählte lebensmittelgeeignete Säure zu der wässrigen Phase zugegeben wird.

20. Verfahren nach einem der Ansprüche 16 bis 19, wobei die Mischung auf eine Temperatur zwischen 30 und 75 °C erhitzt wird.

21. Verfahren nach einem der Ansprüche 16 bis 20, wobei die erste Komponente und die zweite Komponente bei einer Temperatur zwischen 50 °C und 75 °C gemischt werden.

## Revendications

1. Composition de fourrage comprenant une émulsion eau-dans-huile aérée chimiquement comprenant une phase grasse et une phase aqueuse, ledit fourrage aéré comprenant moins de 30 % de matière grasse et ayant une activité de l'eau A_{w} inférieure à 0,65.

2. Composition de fourrage selon la revendication 1, comprenant un produit de réaction d'au moins un agent levant et d'au moins un acide de qualité alimentaire ou sel d'acide de qualité alimentaire.

3. Composition de fourrage selon la revendication 1 ou 2, comprenant un produit de réaction d'au moins un sel carbonate ou sel bicarbonate de qualité alimentaire et au moins un acide ou sel d'acide de qualité alimentaire.

4. Composition de fourrage selon la revendication 3, dans laquelle le sel carbonate ou sel bicarbonate est un sel de métal alcalin ou alcalino-terreux.

5. Composition de fourrage selon l'une quelconque des revendications 2 à 4, dans laquelle l'acide de qualité alimentaire ou le sel d'acide de qualité alimentaire est choisi parmi : l'acide citrique, l'acide tartrique, l'acide fumarique, l'acide lactique, l'acide acétique, l'acide malique, l'acide phosphorique, la crème de tartre, le dihydrogéno-pyrophosphate disodique et le dihydrogénophosphate de sodium.

6. Composition de fourrage selon l'une quelconque des revendications précédentes, comprenant un sel de métal alcalin ou alcalino-terreux d'un acide de qualité alimentaire.

7. Composition de fourrage selon l'une quelconque des revendications précédentes ayant une masse volumique allant d'environ 0,5 g/cm³ à environ 0,9 g/cm³.

8. Composition de fourrage selon l'une quelconque des revendications précédentes, dans laquelle la phase aqueuse de l'émulsion aérée comprend un gaz piégé.

9. Composition de fourrage selon l'une quelconque des revendications précédentes, comprenant de 10 % à 25 % en poids de matière grasse.

10. Composition de fourrage selon l'une quelconque des revendications précédentes, dans laquelle la composition de fourrage est exempte d'émulsifiants synthétiques ajoutés.

11. Composition de fourrage selon l'une quelconque des revendications précédentes, comprenant en outre de 10 à 70 % en poids de sucre, et de 0 à 70 % de poudre de cacao.

12. Produit composite comprenant la composition de fourrage selon l'une quelconque des revendications 1 à 11.

13. Produit composite selon la revendication 12, dans lequel le produit composite est un produit de boulangerie ou de confiserie.

14. Produit composite selon la revendication 12, dans lequel le produit composite est un produit de confiserie et comprend une coque ou un enrobage enfermant au moins partiellement le fourrage.

15. Produit composite selon la revendication 13, dans lequel la composition de fourrage est en contact avec au moins un composant de gaufrette.

16. Procédé de préparation d'une composition de fourrage selon l'une quelconque des revendications 1 à 11, comprenant la fourniture d'un premier composant pour former la phase aqueuse d'une émulsion, la fourniture d'un deuxième composant pour former une phase grasse de l'émulsion, l'ajout d'un acide de qualité alimentaire ou d'un sel d'acide de qualité alimentaire à l'un parmi les premier ou deuxième composants, et l'ajout d'un agent levant au deuxième composant ; le mélange dudit premier composant dans ledit deuxième composant pour former une émulsion eau-dans-huile aérée chimiquement.

17. Procédé selon la revendication 16, dans lequel la phase aqueuse comprend un acide de qualité alimentaire ou un sel d'acide de qualité alimentaire, et la phase grasse comprend un agent levant.

18. Procédé selon la revendication 16 ou 17, dans lequel l'agent levant est du carbonate de calcium et/ou du bicarbonate de sodium.

19. Procédé selon l'une quelconque des revendications 16 à 18, dans lequel un acide de qualité alimentaire choisi parmi l'acide citrique ou l'acide tartrique est ajouté à la phase aqueuse.

20. Procédé selon l'une quelconque des revendications 16 à 19, comprenant le chauffage de la phase aqueuse à une température entre 50 °C et 75 °C.

21. Procédé selon l'une quelconque des revendications 16 à 20, dans lequel le premier composant et le deuxième composant sont mélangés à une température comprise entre 50 °C et 75 °C.
